# EUROPEAN PATENT SPECIFICATION

(11) **EP 0 639 477 B1**
(45) Date of publication and mention of the grant of the patent: **12.11.1997**
(21) Application number: 94112205.3
(22) Date of filing: 04.08.1994
(51) Int. Cl.: B60N 2/02

(54) **Actuator assembly for vehicle seats**
Antriebsanordnung für Fahrzeugsitze
Ensemble d'actionnement pour sièges de véhicules

(30) Priority: 06.08.1993 IT TO930595
(43) Date of publication of application: 22.02.1995
(73) Proprietor: FERRERO GIULIO S.p.A., I-10122 Torino (IT)
(72) Inventor: Ferrero, Ferruccio, I-10040 Savonera-Venaria (IT)
(74) Representative: Prato, Roberto

(56) References cited:
- EP-A- 0 057 617
- EP-A- 0 589 421
- DE-A- 4 002 946

## Description

The present invention relates to an actuator assembly for vehicle seats as defined in the preamble of claim 1. Such seats are generally known in the state of the art.

For adjusting the position of a vehicle seat in relation to the floor, actuator assemblies interposed between the seat portion of the seat and the vehicle floor are used for adjusting the seat horizontally and vertically.

With known actuator assemblies, the seat is normally adjusted horizontally by means of a device comprising a pair of first guides fitted to the floor, and a pair of first slides moved along the first guides by a powered rack and pinion drive. In most cases, the powered drive comprises a pair of racks, each connected integral with a respective first guide, and a pair of pinions, each meshing with a respective rack and fitted to a respective end portion of a powered shaft connected to the first slides transversely in relation to the first guides.

For vertically adjusting the seat, known actuator assemblies comprise a ramp device in turn comprising a pair of second slides supporting the seat frame, defined at the bottom by respective inclined edges, and each fitted in sliding manner to the inclined top edge of a respective first slide. Relative movement of the first and second slides is normally achieved by means of two screw-nut screw devices, each fitted to a respective second slide and operated by a respective electric motor.

Though relatively straightforward to produce, ramp devices of the aforementioned type are less than satisfactory from the operating standpoint, by virtue of vertical adjustment of the seat also resulting automatically in an undesired change in its longitudinal position.

Known actuator assemblies of the above type are also relatively expensive to produce on account of the rack and pinion drives, the racks and pinions of which, as is known, must be made of steel and subsequently fitted to the main body of the actuator, which is normally made of light material, preferably aluminium.

Moreover, known actuator assemblies provide for an extremely limited amount of vertical adjustment; and, by virtue of normally being fitted in projecting manner, the screws of the screw-nut screw devices may oscillate during actual adjustment, thus resulting in jamming and impaired operation of the assembly as a whole.

Finally, a further consequence of the screws being fitted in projecting manner is that, when the seat is positioned with the second slides in the limit stop position, the screws at times project outwards of the seat.

It is an object of the present invention to provide a straightforward, low-cost actuator assembly of the above type designed to overcome the aforementioned drawbacks.

According to the present invention, there is provided an actuator assembly for vehicle seats, interposed between the seat and a supporting body, and comprising guide means fitted to said supporting body, for longitudinally guiding the seat, and control means for vertically adjusting the position of the seat in relation to the guide means; characterized in that it comprises two side members, each comprising a bottom portion fitted in sliding manner to said guide means, and a top portion fitted to the seat; said control means comprising, for each said side member, a first guide-slide assembly interposed between said two portions; and a first and second actuator for imparting to the top portion combinable rocking movements in opposite directions about respective axes perpendicular to said side members.

According to a preferred embodiment of the above actuator assembly, said two perpendicular axes are instantaneous rotation axes on either side of said first assembly.

The slide of each said first assembly is preferably fitted to the respective guide so as to rotate in relation to the guide about an axis parallel to said perpendicular axes; each of the two actuators being located on the opposite side of the respective said perpendicular axis in relation to said first assembly.

Also, for each said side member, each actuator preferably comprises a second guide-slide assembly interposed between said top and bottom portions; the slide of each second assembly being fitted to the respective said guide so as to rotate in relation to the guide about a said perpendicular axis.

A non-limiting embodiment of the present invention will be described by way of example with reference to the accompanying drawings, in which:
Figure 1 shows a view in perspective, with parts removed for clarity, of a preferred embodiment of the actuator assembly according to the present invention;
Figure 2 shows a side view, with parts removed for clarity, of the Figure 1 assembly fitted to a vehicle seat;
Figure 3 shows a plan view of the Figure 1 assembly;
Figure 4 shows a larger-scale section along line IV-IV in Figure 3.

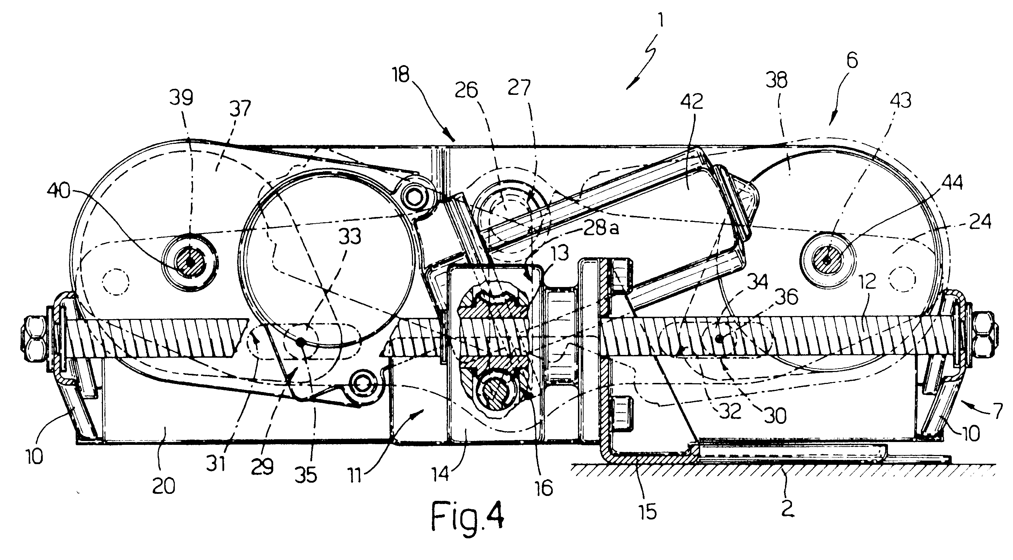

Number 1 in the accompanying drawings indicates an actuator assembly for fitment between the floor 2 (Figure 4) of a vehicle (not shown), particularly a motor vehicle, and the seat portion 3 of a seat 4 presenting a seatback 5 fitted adjustably to a rear portion of seat portion 3.

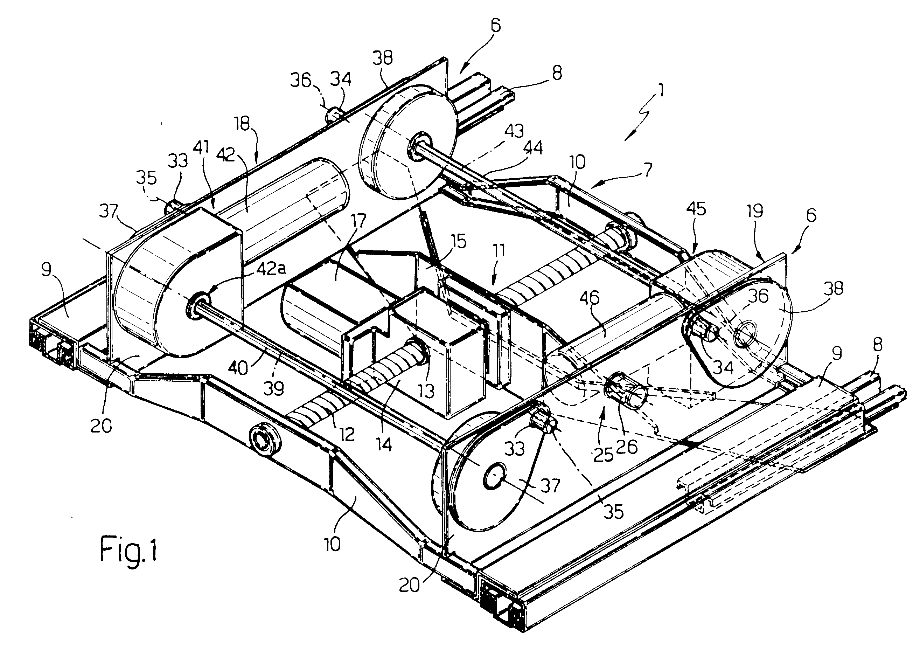

Assembly 1 provides for adjusting the position of seat 4 in relation to floor 2, and comprises two facing lateral blocks 6 dimensionally and geometrically identical to each other, and a central block 7 extending between blocks 6 (Figure 1).

More specifically, each block 6 comprises a longitudinal guide 8 parallel to guide 8 of the other block 6 and fitted integrally, in use, to floor 2; and an elongated slide 9 fitted in sliding manner to respective guide 8; and central block 7 comprises a pair of cross members 10 extending between slides 9 and presenting respective opposite end portions connected integral with respective opposite longitudinal ends of slides 9.

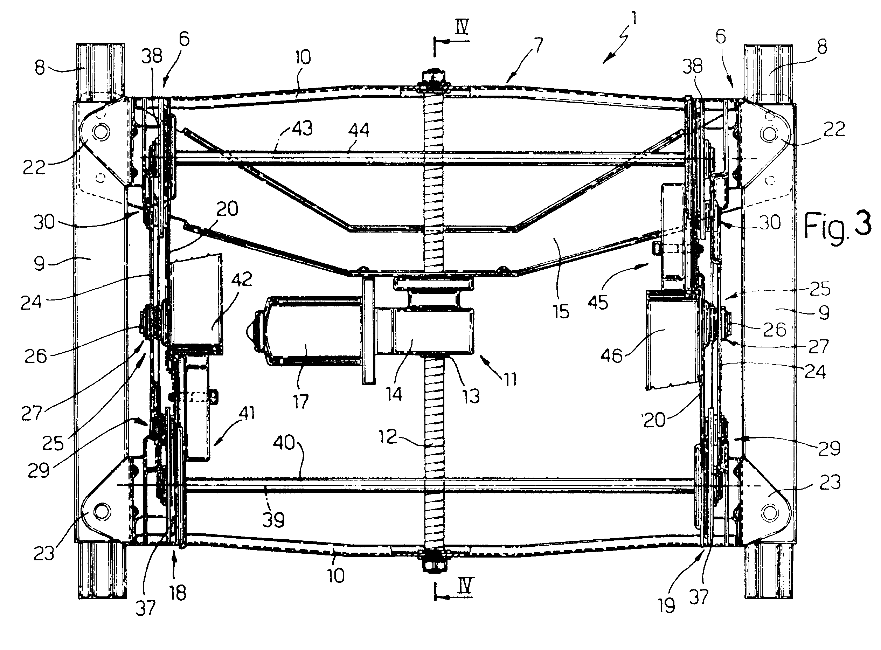

The space defined between slides 9 and cross members 10 houses an actuator assembly 11 for moving slides 9 synchronously back and forth and into given corresponding positions along guides 8. Assembly 11 comprises a screw 12 extending longitudinally between cross members 10, parallel to guides 8, and the end portions of which are connected integral with respective intermediate portions of cross members 10. Screw 12 is fitted with a nut screw 13 in turn fitted in rotary and axially fixed manner to a hollow supporting body 14. Body 14 is connected integral with a further fixed cross member 15 extending between cross members 10, and the end portions of which are each connected integral with a respective guide 8, and more specifically with the surface of guide 8 facing floor 2 (Figures 3 and 4). Nut screw 13 is rotated about its axis by a worm-helical gear drive 16 (Figure 4) housed in body 14 and powered by a motor 17 (Figures 1 and 3) supported by body 14 and cross member 15.

According to a variation not shown, slides 9 are moved along guides 8 by the user, and actuator assembly 11 is replaced by known hand-operated lock elements interposed between guides 8 and respective slides 9, for selectively locking slides 9 in a number of axial positions in relation to guides 8.

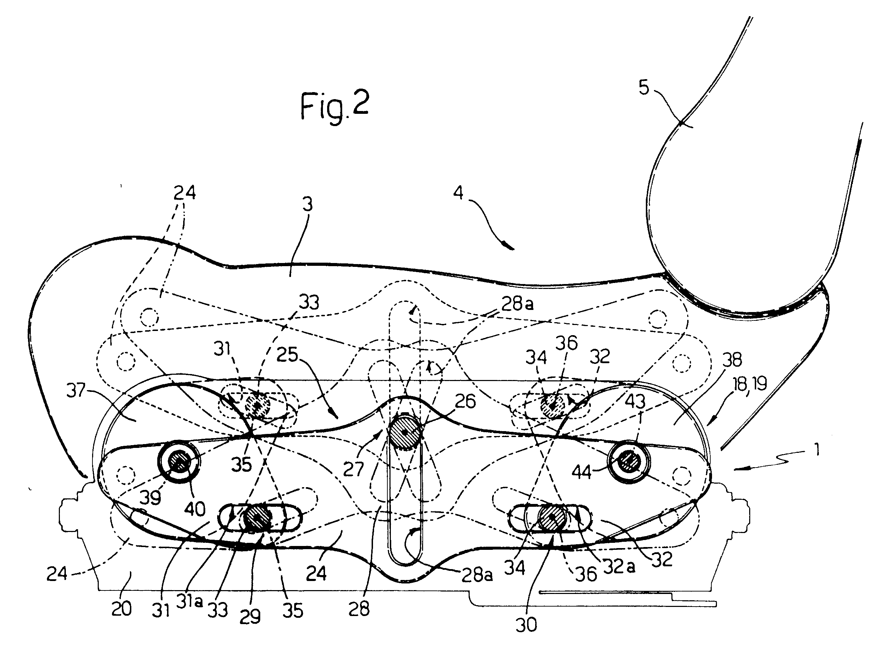

With reference to Figures 2, 3 and 4, assembly 1 also comprises two longitudinal side members 18 and 19, each forming part of a respective block 6, each extending upwards from a respective slide 9, and each comprising (Figures 1 and 2) a bottom portion or plate 20 connected integral with respective slide 9 by means of a pair of brackets 22, 23 (Figure 3), and a top portion or plate 24 which, together with the other top plate 24, supports the bottom (not shown) of seat portion 3.

Top plates 24 are connected to respective bottom plates 20 via the interposition of an actuating unit 25 for vertically adjusting the position of top plates 24 in relation to respective bottom plates 20 and, consequently, the position of seat portion 3 in relation to guides 8.

With reference to Figures 3 and 4, plates 20 and 24 of each side member 18, 19 lie in respective side by side vertical planes with plate 24 outwards of plate 20; and each is substantially rectangular with a substantially horizontal longitudinal axis. More specifically, plate 20 of each side member 18, 19 is substantially the same length as plate 24, and presents a cylindrical pin 26 projecting transversely in relation to guides 8 from the outer surface of plate 20 towards respective plate 24, and which forms the guide of a respective guide-slide assembly 27 forming part of actuating unit 25. The slide of each assembly 27 is defined by a central portion 28 of plate 24 (Figure 2), which presents a straight slot 28a extending transversely to the longitudinal axis of respective plate 24 and engaged in rotary and transversely sliding manner by respective pin 26.

Plates 20 and 24 of each side member 18, 19 are also connected to each other by a further two guide-slide assemblies 29 and 30 also forming part of actuating unit 25 and located at the opposite axial ends of plate 20, symmetrically in relation to assembly 27. The slides of assemblies 29 and 30 are defined by respective lateral portions 31 and 32 of plates 24, which present respective slots 31a and 32a extending on either side of and perpendicularly to respective slot 28a; while the guides of assemblies 29 and 30 are movable guides defined by respective pins 33 and 34 presenting respective axes 35 and 36 parallel to pin 26, and extending in rotary and transversely sliding manner through respective slots 31a and 32a.

Pins 33 and 34 of each side member 18, 19 are connected integral with respective cranks 37 and 38 perpendicular to pins 33 and 34 and extending at least partly between plates 20 and 24.

The two cranks 37 are mounted parallel to each other on plates 20 of respective side members 18 and 19, and are connected in rotary manner to respective plates 20 so as to rotate, in relation to plates 20, about a common axis 39 perpendicular to guides 8 and coincident with the axis of a drive rod 40 forming part of block 7 and extending between plates 20 to connect cranks 37 integral with each other. The two cranks 37 and rod 40 together form the output member of an actuator 41 forming part of actuating unit 11 and comprising a motor 42 supported on plate 20 of side member 18, and a gear drive 42a (shown partly in Figure 1) - preferably a planocentric drive - interposed between motor 42 and rod 40 and housed inside a respective casing.

The two cranks 38 are mounted parallel to each other on plates 20 of respective side members 18 and 19, and are connected in rotary manner to respective plates 20 so as to rotate, in relation to plates 20, about a common axis 43 perpendicular to guides 8 and coincident with the axis of a drive rod 44 extending between plates 20 to connect cranks 38 integral with each other. The two cranks 38 and rod 44 together form the output member of an actuator 45 identical to actuator 41 and also forming part of actuating unit 11. Actuator 45 is connected to respective plate 20 on the opposite side of the common axis of pins 26 to actuator 41, and comprises a motor 46 supported on plate 20 of side member 19, and a known drive identical to drive 42a of actuator 41.

According to a variation not shown, motors 42 and 46 are replaced by hand-operated knobs (not shown) for rotating respective cranks 37, 38.

In actual use, the longitudinal position of seat portion 3 in relation to floor 2 is adjusted by moving slides 9 in one direction or the other in relation to respective guides 8 by means of motor 17; while the vertical position of seat portion 3 is adjusted by simultaneously operating motors 42 and 46 which, via respective actuators 41 and 45, rotate respective cranks 37 and 38 in opposite directions about respective axes 39 and 43, so that respective pins 33 and 34 slide in opposite directions along respective slots 31 and 32.

More specifically, operation of motor 42 moves the two pins 33 along respective slots 31 so as to rock seat portion 3 about an instantaneous transverse axis coincident with axis 36 of pins 34 and located on the opposite side of vertical assembly 27 to actuator 41. Due to the presence of assembly 27, displacement of pins 33 along slots 31 by motor 42 results, when motor 46 is idle, in rotation of seat portion 3 about axis 36 of pins 34, and in vertical displacement of axis 35.

Similarly, operation of motor 46 moves the two pins 34 along respective slots 32 so as to rock seat portion 3 about an instantaneous transverse axis coincident with axis 35 of pins 33 and located on the opposite side of vertical assembly 27 to actuator 45 and axis 36. In this case also, due to the presence of assembly 27, horizontal displacement of pins 34 along slots 32 by motor 46 results, when motor 42 is idle, in rotation of seat portion 3 about axis 35 of pins 33, and in vertical displacement of axis 36.

The above two rocking movements - one about the pivot axis of the crank effecting the other - are perfectly combinable and, if similar and effected simultaneously in opposite directions, combine to produce a purely vertical displacement of seat portion 3.

As compared with known actuator assemblies, assembly 1 therefore presents the advantage of enabling vertical adjustment of seat portion 3 with no change in its longitudinal position, while at the same time enabling controlled forward and/or backward rocking of the seat portion in relation to floor 2.

As regards the structure of assembly 1, it should be pointed out that, being defined by two identical lateral portions 6 and by a central portion 7 comprising cross members 10 and rods 40 and 44, assembly 1 is readily adaptable to seats of any width by simply adapting central portion 7, and more specifically by using transverse rods 40, 44 and cross members 10 of different lengths.

Moreover, rods 40 and 44 are relatively economical in the event, as stated, planocentric drives are used for transmitting motion to cranks 37, 38; in which case, transverse rods 40 and 44 may be straightforward smooth rods, unlike known seats normally featuring transverse rods consisting of high-cost screws.

Production cost is also drastically reduced by the identical design of lateral blocks 6 and by eliminating the rack and pinion drives of assembly 1. In particular, guides 8 may be formed from ordinary light metal U sections with no additional processing which, in the case of known guides, is indispensable for connecting the racks to the guides.

The fact that motors 42 and 46 controlling seat portion 3 are each connected to a respective side member 18, 19 and housed inside the space between side members 18 and 19 provides for solving various problems as regards size and interference of motors 42 and 46 with the vehicle floor.

The fact that screw 12 controlling slides 9 is axially fixed, and more specifically presents both ends connected integral with cross members 10, provides for eliminating in-service oscillation, and hence jamming, of screw 12. What is more, the particular way in which screw 12 is connected to cross members 10 and the provision of cross members 10 for connecting side members 18 and 19 provide for forming a highly rigid carriage, the rigidity of which, following fitment of assembly 1 to seat 4, contributes towards greatly improving the rigidity of the frame (not shown) of seat 4.

Finally, the travel of the above carriage is substantially equal to the length of guides 8, and, even when the carriage is set to the limit stop position, no moving parts project outwards of the carriage or, consequently, outwards of seat 4.

## Claims

1. An actuator assembly (1) for vehicle seats, interposed between the seat (4) and a supporting body (2), and comprising guide means (8) fitted to said supporting body (2), for longitudinally guiding the seat (4), and control means (25) for vertically adjusting the position of the seat (4) in relation to the guide means (8); characterized in that it comprises two side members (18, 19), each comprising a bottom portion (20) fitted in sliding manner to said guide means (8), and a top portion (24) fitted to the seat (4); said control means (25) comprising, for each said side member (18, 19), a first guide-slide assembly (27) interposed between said two portions (20)(24); and a first and second actuator (41)(45) for imparting to the top portion (24) combinable rocking movements in opposite directions about respective axes (35)(36) perpendicular to said side members (18, 19).

2. An assembly as claimed in Claim 1, characterized in that said two perpendicular axes (35)(36) are instantaneous rotation axes on either side of said first assembly (27).

3. An assembly as claimed in Claim 2, characterized in that the slide (28) of each said first assembly (27) is connected to the respective guide (26) so as to rotate in relation to the guide (26) about an axis parallel to said perpendicular axes (35, 36); each of the two actuators (41)(45) being located on the opposite side of the respective said perpendicular axis (35)(36) in relation to said first assembly (27).

4. An assembly as claimed in Claim 3, characterized in that, for each said side member (18, 19), each actuator (41)(45) comprises a second guide-slide assembly (29)(30) interposed between said top (24) and bottom (20) portions; the slide (31)(32) of each second assembly (29)(30) being connected to the respective guide (33)(34) so as to rotate in relation to the guide (33)(34) about a said perpendicular axis (35)(36).

5. An assembly as claimed in Claim 4, characterized in that, on each said side member (18, 19), the guide (33)(34) of each said second assembly (29)(30) is associated with a first (20) of said portions (20, 24), and the respective slide (31)(32) is carried on a second (24) of said portions (20, 24); each actuator (41)(45) also comprising activating means (37)(38) for moving the respective said guides (33)(34) in relation to said first portion (20) and for rotating the slides (31)(32) in relation to the guides (33)(34) about the respective said perpendicular axis (35)(36).

6. An assembly as claimed in Claim 5, characterized in that the slide (28) of each said first assembly (27) is carried on said top portion (24) and comprises a first slot (28a); and the respective guide is defined by a first pin (26) connected integral with said bottom portion (20) and engaging said slot (28a) in rotary and transversely sliding manner.

7. An assembly as claimed in Claim 6, characterized in that the slide (31)(32) of each said second assembly (29)(30) is carried on said top portion (24) and comprises a second slot (31a)(32a); and the respective guide is defined by a second pin (33)(34) coaxial with the respective said perpendicular axis (35)(36) and engaging the respective said second slot (31a)(32a) in rotary and transversely sliding manner.

8. An assembly as claimed in Claim 7, characterized in that, on each said top portion (24), said second slots (31a)(32a) are located on either side of and substantially perpendicular to the respective said first slot (28a); and said activating means (37)(38) of each said second pin (33)(34) are carried on a respective said bottom portion (20), and comprise a crank (37)(38) fitted to the respective said bottom portion (20) so as to rotate about a respective rotation axis (39)(43) and fitted integral with the respective said second pin (33)(34); and drive means (40, 41)(44, 45) for rotating the crank (37)(38) in relation to the respective bottom portion (20) and about said rotation axis (39)(43).

9. An assembly as claimed in Claim 8, characterized in that a transverse rod (40)(44) is interposed between each said crank (37)(38) of each said side member (18)(19) and the corresponding crank (37)(38) of the other side member (18)(19) for angularly connecting said two corresponding cranks (37)(38); said rod (40)(44) being rotated about its axis (39)(43) by a respective said actuator (41)(45).

10. An assembly as claimed in Claim 9, characterized in that each said actuator (41)(45) comprises a motor (42)(46) and a drive (42a) interposed between the respective motor (42)(46) and the respective rod (40)(44), for rotating the respective rod (40)(44) about its axis (39)(43).

11. An assembly as claimed in Claim 10, characterized in that said motor (42)(46) and said drive (42a) are carried on a respective said bottom portion (20).

12. An assembly as claimed in any one of the foregoing Claims, characterized in that said side members (18)(19) are geometrically and dimensionally identical.

13. An assembly as claimed in any one of the foregoing Claims, characterized in that it also comprises slide means (9, 10) fitted in sliding manner to said guide means (8); said slide means (9, 10) supporting said side members (18, 19) and said control means (25); and further control means (11) being interposed between said slide means (9, 10) and said guide means (8), for moving the slide means (9, 10) along said guide means (8).

14. An assembly as claimed in Claim 13, characterized in that said guide means comprise two parallel guides (8) fitted integrally to said supporting body (2); and a first cross member (15) extending between and connected integral with said guides (8); said slide means comprising two slides (9), each fitted in sliding manner to a respective said guide (8); and a pair of second cross members (10) connecting the slides (9) to each other and located on either side of said first cross member (15); said bottom portions (20) being connected integral with said second cross members (10); and said further control means (11) being interposed between the second cross members (10).

15. An assembly as claimed in Claim 14, characterized in that said further control means (11) comprise a screw-nut screw assembly (12, 13) and a further motor (17) for activating the screw-nut screw assembly (12, 13); the screw-nut screw assembly comprising a screw (12) extending between said second cross members (10), parallel to the two guides (8) fittable to said supporting body (2), and presenting opposite end portions connected to respective said second cross members (10); said screw-nut screw assembly also comprising a nut screw (13) fitted to said screw (12) and carried on said first cross member (15); said further motor (17) being carried on said first cross member (15) and activating said nut screw (13).

## Patentansprüche

1. Antriebsanordnung (1) für Fahrzeugsitze, die zwischen dem Sitz (4) und einem Stützkörper (2) angeordnet ist und die Führungseinrichtungen (8) aufweist, die an dem Stützkörper (2) angebracht sind, um den Sitz (4) in einer Längsrichtung zu führen, und die eine Steuerungseinrichtung (25) aufweist, um die Position des Sitzes (4) bezüglich den Führungseinrichtungen (8) vertikal einzustellen, dadurch gekennzeichnet, daß sie zwei Seitenbauteile (18, 19) aufweist, von denen jedes ein unteres Teilstück (20) aufweist, das gleitend an der Führungseinrichtung (8) angebracht ist, und von denen jedes ein oberes Teilstück (24) aufweist, das an dem Sitz (4) befestigt ist; daß die Steuerungseinrichtung (25) für jedes der Seitenbauteile (18, 19) eine erste Führungs-Gleitanordnung (27) aufweist, die zwischen den beiden Teilstücken (20, 24) angeordnet ist; sowie einen ersten und einen zweiten Aktuator (41)(45), um auf das obere Teilstück (24) kombinierbare Schaukelbewegungen auszuüben, und zwar in gegensätzlichen Richtungen um jeweilige Achsen (35)(36), die senkrecht zu den Seitenbauteilen (18, 19) verlaufen.

2. Anordnung gemäß Anspruch 1, dadurch gekennzeichnet, daß die beiden senkrechten Achsen (35)(36) momentane Drehachsen auf beiden Seiten der ersten Anordnung (27) sind.

3. Anordnung gemaß Anspruch 2, dadurch gekennzeichnet, daß der Schlitten (28) einer jeden ersten Anordnung (27) derart mit der jeweiligen Führung (26) verbunden ist, daß er bezüglich der Führung (26) um eine Achse dreht, die parallel zu den senkrechten Achsen (35, 36) verläuft; wobei jeder der beiden Aktuatoren (41)(45) bezüglich der ersten Anordnung (27) auf der gegenüberliegenden Seite der jeweiligen senkrechten Achse (35)(36) angeordnet ist.

4. Anordnung gemäß Anspruch 3, dadurch gekennzeichnet, daß für jedes Seitenbauteil (18, 19) jeder Aktuator (41)(45) eine zweite Führungs-Gleitanordnung (29)(30) aufweist, die zwischen dem oberen Teilstück (24) und dem unteren Teilstück (20) angeordnet ist; wobei der Schlitten (31)(32) jeder zweiten Anordnung (29)(30) mit der jeweiligen Führung (33)(34) verbunden so ist, daß sie sich bezüglich der Führung (33)(34) um eine senkrechte Achse (35)(36) dreht.

5. Anordnung gemäß Anspruch 4, dadurch gekennzeichnet, daß auf jedem Seitenbauteil (18, 19) die Führung (33)(34) einer jeden zweiten Anordnung (29)(30) einem ersten Teilstück (20) der Teilstücke (20, 24) zugeordnet ist und daß der jeweilige Schlitten (31)(32) auf einem zweiten Teilstück (24) der Teilstücke (20, 24) getragen wird; wobei jeder Aktuator (41)(45) ebenso eine Aktivierungseinrichtung (37)(38) aufweist, um die jeweiligen Führungen (33)(34) bezüglich des ersten Teilstücks (20) zu bewegen und um die Schlitten (31)(32) bezüglich den Führungen (33)(34) um die jeweilige senkrechte Achse (35)(36) zu drehen.

6. Anordnung gemäß Anspruch 5, dadurch gekennzeichnet, daß der Schlitten (28) jeder ersten Anordnung (27) auf dem oberen Teilstück (24) getragen wird und daß er einen ersten Schlitz (28a) aufweist; und daß die jeweilige Führung durch einen ersten Stift (26) gebildet ist, der einstückig mit dem unteren Teilstück (20) verbunden ist und der drehbar und querverschieblich im Schlitz (28a) eingreift.

7. Anordnung gemäß Anspruch 6, dadurch gekennzeichnet, daß der Schlitten (31)(32) jeder zweiten Anordnung (29)(30) auf dem oberen Teilstück (24) getragen wird und daß er einen zweiten Schlitz (31a)(32a) aufweist; und daß die jeweilige Führung durch einen zweiten Stift (33)(34) gebildet ist, der koaxial mit der entsprechenden senkrechten Achse (35)(36) verläuft und der drehbar und querverschieblich im jeweiligen zweiten Schlitz (31a)(32a) eingreift.

8. Anordnung gemäß Anspruch 7, dadurch gekennzeichnet, daß auf jedem der oberen Teilstücke (24) die zweiten Schlitze (31a)(32a) auf beiden Seiten und im wesentlichen rechtwinklig zu dem jeweiligen ersten Schlitz (28a) angeordnet sind; und daß die Aktivierungseinrichtungen (37)(38) eines jeden zweiten Stifts (33)(34) auf einem jeweiligen unteren Teilstück (20) getragen werden und eine Kurbel (37)(38) aufweisen, die an dem entsprechenden unteren Teilstück (20) befestigt ist, so daß sie um eine jeweilige Rotationsachse (39)(43) dreht, und daß sie integral mit dem jeweiligen zweiten Stift (33)(34) ausgeführt ist; und daß eine Antriebseinrichtung (40, 41) (44, 45) zum Drehen der Kurbel (37)(38) bezüglich des jeweiligen unteren Teilstücks (20) sowie um die Rotationsachse (38)(43) vorgesehen ist.

9. Anordnung gemäß Anspruch 8, dadurch gekennzeichnet, daß eine Querstange (40)(44) zwischen jeder Kurbel (37)(38) jedes Seitenbauteils (18)(19) und der entsprechenden Kurbel (37)(38) des anderen Seitenbauteils (18)(19) zum winkelmäßigen Verbinden der beiden entsprechenden Kurbeln (37)(38) angeordnet ist; wobei die Stange (40)(44) durch einen jeweiligen Aktuator (41)(45) um ihre Achse (39)(43) gedreht wird.

10. Anordnung gemäß Anspruch 9, dadurch gekennzeichnet, daß jeder der Aktuatoren (41)(45) einen Motor (42)(46) und einem Antrieb (42a) aufweist, der zwischen dem jeweiligen Motor (42)(46) und der jeweiligen Stange (40)(44) angeordnet ist, um die jeweiligen Stange (40)(44) um ihre Achse (39)(43) zu drehen.

11. Anordnung gemäß Anspruch 10, dadurch gekennzeichnet, daß der Motor (42)(46) und der Antrieb (42a) auf einem jeweiligen unteren Teilstück (20) getragen werden.

12. Anordnung gemäß einem der vorhergehenden Ansprüche, dadurch gekennzeichnet, daß die Seitenbauteile (18)(19) geometrisch und in den Abmessungen identisch sind.

13. Anordnung gemäß einem der vorhergehenden Ansprüche, dadurch gekennzeichnet, daß sie weiterhin Gleiteinrichtungen (9, 10) aufweist, die gleitend an der Führungseinrichtung (8) angebracht sind; daß die Gleiteinrichtungen (9, 10) die Seitenbauteile (18, 19) und die Steuerungseinrichtung (25) unterstützen; und daß weiterhin eine Steuerungseinrichtung (11) zwischen den Gleiteinrichtungen (9, 10) und der Führungseinrichtung (8) angeordnet ist, um die Gleiteinrichtungen (9, 10) entlang der Führungseinrichtung (8) zu bewegen.

14. Anordnung gemäß Anspruch 13, dadurch gekennzeichnet, daß die Führungseinrichtung zwei parallele Führungen (8) aufweist, die integral an dem Tragkörper (2) befestigt sind; und daß sich ein erstes Querbauteil (15) zwischen den Führungen (8) erstreckt und mit diesen integral verbunden ist; daß die Gleiteinrichtung zwei Schlitten (9) aufweist, von denen jeder gleitend an einer jeweiligen Führung (8) befestigt ist; und daß ein Paar zweiter Querbauteile (10) die Schlitten (9) miteinander verbindet und auf beiden Seiten der ersten Querbauteile (15) angeordnet ist; daß die unteren Teilstücke (20) integral mit den zweiten Querbauteilen (10) verbunden sind; und daß die weitere Steuerungseinrichtung (11) zwischen den zweiten Querbauteilen (10) angeordnet ist.

15. Anordnung gemäß Anspruch 14, dadurch gekennzeichnet, daß die weitere Steuerungseinrichtung (11) eine Schrauben-Mutter-Schraubanordnung (12, 13) und einen weiteren Motor (17) zum Aktivieren der Schrauben-Mutter-Schraubanordnung (12, 13) aufweist; daß die Schrauben-Mutter-Schraubanordnung eine Schraube (12) aufweist, die sich zwischen den beiden Querbauteilen (10) erstreckt, und zwar parallel zu den beiden Führungen (8), die an dem Tragkörper (2) befestigbar sind, und die gegenüberliegende Endteilstücke aufweist, die mit jeweiligen beiden Querbauteilen (10) verbunden sind; wobei die Schrauben-Mutter-Schraubanordnung weiterhin eine Schraubmutter (13) aufweist, die an der Schraube (12) befestigt ist und die auf dem ersten Querbauteil (15) getragen wird; wobei der weitere Motor (17) auf dem ersten Querbauteil (15) getragen wird und die Schraubmutter (13) aktiviert.

## Revendications

1. Ensemble d'actionnement pour sièges de véhicules, intercalé entre le siège (4) et un corps de support (2) et comportant un moyen de guidage (8) installé sur ledit corps de support (2), pour guider longitudinalement le siège (4), et un moyen de commande (25) pour régler verticalement la position du siège (4) par rapport au moyen de guidage (8); caractérisé en ce qu'il comporte deux éléments latéraux (18, 19) comprenant chacun une partie inférieure (20) installée de manière coulissante sur ledit moyen de guidage (8), et une partie supérieure (24) installée sur le siège (4); ledit moyen de commande (25) comprenant, pour chacun desdits éléments latéraux (18, 19), un premier ensemble guide-glissière (27) intercalé entre lesdites deux parties (20)(24); et un premier et un deuxième actionneurs (41)(45) pour communiquer à la partie supérieure (24) des mouvements de basculement combinables dans des directions opposées autour d'axes respectifs (35) (36) perpendiculaires auxdits éléments latéraux (18, 19).

2. Ensemble selon la revendication 1, caractérisé en ce que lesdits deux axes perpendiculaires (35)(36) sont des axes de rotation instantanée de part et d'autre dudit premier ensemble (27).

3. Ensemble selon la revendication 2, caractérisé en ce que la glissière (28) de chacun desdits premiers ensembles (27) est reliée au guide respectif (26) de façon à tourner par rapport au guide (26) autour d'un axe parallèle auxdits axes perpendiculaires (35, 36), chacun des deux actionneurs (41)(45) se trouvant du côté opposé audit axe perpendiculaire respectif (35)(36) par rapport audit premier ensemble (27).

4. Ensemble selon la revendication 3, caractérisé en ce que, pour chacun desdits éléments latéraux (18, 19), chaque actionneur (41)(45) comprend un deuxième ensemble guide-glissière (29)(30) intercalé entre lesdites parties supérieure (24) et inférieure (20), la glissière (31)(32) de chaque deuxième ensemble (29)(30) étant reliée au guide respectif (33)(34) de façon à tourner par rapport au guide (33)(34) autour d'un desdits axes perpendiculaires (35)(36).

5. Ensemble selon la revendication 4, caractérisé en ce que, sur chacun desdits éléments latéraux (18, 19), le guide (33) (34) de chacun desdits deuxièmes ensembles (29)(30) est associé à une première (20) desdites parties (20, 24), et la glissière respective (31)(32) est portée par une deuxième (24) desdites parties (20, 24), chaque actionneur (41)(45) comprenant également un moyen d'activation (37) (38) pour déplacer lesdits guides respectifs (33)(34) par rapport à ladite première partie (20) et pour faire tourner les glissières (31)(32) par rapport aux guides (33) (34) autour dudit axe perpendiculaire respectif (35)(36).

6. Ensemble selon la revendication 5, caractérisé en ce que la glissière (28) de chacun desdits premiers ensembles (27) est portée par ladite partie supérieure (24) et comporte une première fente (28a), et le guide respectif est défini par un premier doigt (26) faisant corps avec ladite partie inférieure (20) et s'engageant dans ladite fente (28a) en tournant et en coulissant transversalement.

7. Ensemble selon la revendication 6, caractérisé en ce que la glissière (31)(32) de chacun desdits deuxièmes ensembles (29) (30) est portée par ladite partie supérieure (24) et comporte une deuxième fente (31a)(32a); et le guide respectif est défini par un deuxième doigt (33) (34) coaxial audit axe perpendiculaire respectif (35)(36) et s'engageant dans ladite deuxième fente respective (31a)(32a) en tournant et en coulissant transversalement.

8. Ensemble selon la revendication 7, caractérisé en ce que, sur chacune desdites parties supérieures (24), lesdites deuxièmes fentes (31a)(32a) se trouvent de part et d'autre de ladite première fente respective (28a) et sensiblement perpendiculairement à cette dernière, et lesdits moyens d'activation (37)(38) de chacun desdits deuxièmes doigts (33)(34) sont portés par une respective desdites parties inférieures (20), et comportent une manivelle (37)(38) disposée sur ladite partie inférieure respective (20) de façon à tourner autour d'un axe de rotation respectif (39)(43) et faisant corps avec ledit deuxième doigt respectif (33)(34), et des moyens d'entraînement (40, 41)(44, 45) pour faire tourner la manivelle (37) (38) par rapport à la partie inférieure respective (20) et autour dit axe de rotation (39)(43).

9. Ensemble selon la revendication 8, caractérisé en ce qu'une tige transversale (40) (44) est intercalée entre chacune desdites manivelles (37)(38) de chacun desdits éléments latéraux (18)(19) et la manivelle correspondante (37)(38) de l'autre élément latéral (18)(19) pour relier de manière angulaire lesdites deux manivelles correspondantes (37)(38), ladite tige (40)(44) tournant autour de son axe (39) (43) sous l'action d'un desdits actionneurs respectifs (41)(45).

10. Ensemble selon la revendication 9, caractérisé en ce que chacun desdits actionneurs (41) (45) comprend un moteur (42) (46) et un mécanisme d'entraînement (42a) intercalé entre le moteur respectif (42) (46) et la tige respective (40)(44) pour faire tourner la tige respective (40)(44) autour de son axe (39)(43).

11. Ensemble selon la revendication 10, caractérisé en ce que ledit moteur (42) (46) et ledit mécanisme d'entraînement (42a) sont portés par une partie inférieure respective (20).

12. Ensemble selon l'une quelconque des revendications précédentes, caractérisé en ce que lesdits éléments latéraux (18)(19) sont identiques par leur forme et leurs dimensions.

13. Ensemble selon l'une quelconque des revendications précédentes, caractérisé en ce qu'il comprend aussi des moyens coulissants (9, 10) montés de manière coulissante sur ledit moyen de guidage (8), lesdits moyens coulissants (9, 10) supportant lesdits éléments latéraux (18, 19) et ledit moyen de commande (25), et un autre moyen de commande (11) étant intercalé entre lesdits moyens coulissants (9, 10) et ledit moyen de guidage (8) pour déplacer les moyens coulissants (9, 10) le long dudit moyen de guidage (8).

14. Ensemble selon la revendication 13, caractérisé en ce que ledit moyen de guidage comprend deux guides parallèles (8) solidaires dudit corps de support (2), et un premier élément transversal (15) s'étendant entre lesdits guides (8) et d'une seule pièce avec ces derniers, lesdits moyens coulissants comprenant deux glissières (9) disposées chacune de manière coulissante sur un guide respectif (8), et une paire de deuxièmes éléments transversaux (10) reliant l'une à l'autre les glissières (9) et situés de part et d'autre dudit premier élément transversal (15), lesdites parties inférieures (20) faisant corps avec lesdits deuxièmes éléments transversaux (10), et ledit autre moyen de commande (11) étant intercalé entre les deuxièmes éléments transversaux (10).

15. Ensemble selon la revendication 14, caractérisé en ce que ledit autre moyen de commande (11) comprend un système de vissage (12, 13) à vis et écrou et un autre moteur (17) pour activer le système de vissage (12, 13) à vis et écrou, le système de vissage à vis et écrou comprenant une vis (12) s'étendant entre lesdits deuxièmes éléments transversaux (10), parallèlement aux deux guides (8) montables sur ledit corps de support (2), et présentant des extrémités opposées reliées auxdits deuxièmes éléments transversaux respectifs (10), ledit système de vissage à vis et écrou comprenant aussi un écrou fileté (13) vissé sur ladite vis (12) et porté par ledit premier élément transversal (15), ledit autre moteur (17) étant porté par ledit premier élément transversal (15) et activant ledit écrou fileté (13).
